(19) Europäisches Patentamt
European Patent Office
Office européen des brevets

(11) **EP 4 660 175 A1**

(12) **EUROPEAN PATENT APPLICATION**

(43) Date of publication:
10.12.2025 Bulletin 2025/50

(21) Application number: 24179616.8

(22) Date of filing: 03.06.2024

(51) International Patent Classification (IPC):
*C05G 3/90* (2020.01)

(52) Cooperative Patent Classification (CPC):
(C-Sets available)
C05G 3/90; C05F 11/02          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Sabic Agri-Nutrients Company
31961 Jubail (SA)

(72) Inventors:
• ACHANATH, Radha
562125 Bangalore (IN)
• MARKANDAY, Meghna
562125 Bangalore (IN)

(74) Representative: J A Kemp LLP
80 Turnmill Street
London EC1M 5QU (GB)

(54) **NITRIFICATION INHIBITOR FOR FERTILIZER APPLICATION**

(57) A nitrification inhibitor composition comprising one or more naturally occurring nitrification inhibitors, and one or more of a biochar and/or a urease inhibitor. Also a method for inhibiting nitrification in soil. Some aspects include a combination of methyl 3-(4-hydroxyphenyl) propionate and 1,9-decanediol.

EP 4 660 175 A1

**(Cont. next page)**

(52) Cooperative Patent Classification (CPC): (Cont.)

C-Sets
**C05F 11/02, C05G 3/90**

**Description**

**BACKGROUND OF THE INVENTION**

**I. Field of the Disclosure**

This disclosure generally concerns compositions for maintaining or reducing the loss of nitrogen content in soils.

**II. Background**

Nitrogen (N) is one of the most important nutrients for plant growth and productivity. Urea is a widely used nitrogen fertilizer in world agriculture. In soil, urea can be hydrolyzed by urease, a nickel-dependent enzyme that catalyzes the hydrolysis of urea to form ammonia ($NH_3$) and carbon dioxide ($CO_2$). This in turn causes a sharp increase in soil pH and an accumulation of $NH_4^+$ in the soil, which has negative side effects on agriculture and health. In surface applications of urea, the formation of gaseous $NH_3$ by urease can constitute up to 50% loss of the nitrogen of the applied urea, especially in soils with low buffer capacity, in calcareous soils, and in soils with high organic carbon content. Another negative effect of urea hydrolysis is the accumulation of $NO_2^-$, which can damage germinating seeds, seedlings, and young plants.

Ammonia can be lost to the atmosphere as a gas or can be oxidized to nitrite that can be further oxidized to nitrate. In some conditions, the loss can be rapid and significant. Some use excess nitrogen fertilizers to make up for the losses. However, excess use of Nitrogen fertilizer in agricultural lands has led to environmental pollution like nitrate leaching and gaseous nitrous oxide emission. Nitrate leaching further results in the eutrophication of groundwater, while nitrous oxide is a greenhouse gas with a global warming potential of 300 times greater than carbon dioxide.

As the nitrification process typically leads to nitrogen losses and environmental pollution, inhibition of nitrification is an important strategy to avoid or reduce these issues. Also, by keeping urea from hydrolyzing, urease inhibitors protect against ammonia volatilization, keeping fertilizer N in the urea form.

The use of synthetic nitrification Inhibitors (SNIs), such as dicyandiamide, 3,4-dimethyl pyrazole phosphate, and 2-chloro-6-(trichloromethyl) pyridine (nitrapyrin), are known in agriculture, however, they are not widely adopted due to the ongoing debate, that they might stimulate ammonia volatilization and also due to the risk of transfer across food chains. Further, synthetic nitrification inhibitors are associated with a variety of challenges, including instability at high temperatures, instability at high or low pH, variable effectiveness, difficulties in application, high cost, and environmental pollution. Hence there is a need for effective and environmentally friendly nitrification inhibitors, especially naturally occurring nitrification inhibitors that can be effective over broad ranges of soil types, pH, and temperatures.

**SUMMARY OF THE INVENTION**

A solution to at least some of the problems discussed above is disclosed herein. The solution in some instances lies in a naturally occurring nitrification inhibitor or a combination of the naturally occurring nitrification inhibitors such as a hydrophobic naturally occurring nitrification inhibitor and a hydrophilic naturally occurring nitrification inhibitor and methods for making and/or using the composition of inhibitors. The naturally occurring nitrification inhibitors disclosed herein can include small molecules that can, in some instances, be synthesized in a single step using relatively inexpensive reagents/reactants. The naturally occurring nitrification inhibitors, in some instances, have a high melting point, which facilitates formulating the nitrification inhibitors with melted urea at a temperature of about 132 to 135 °C or greater. The naturally occurring nitrification inhibitors exhibit no known toxicity and the combinations are equally or more effective than nitrification inhibitors currently on the market. The combinations of naturally occurring nitrification inhibitors can be used in a variety of soil types, and over broad ranges of climatic conditions including temperature and pH. Certain aspects of the disclosure are therefore directed to a composition that provides decreased oxidation of ammonia and/or ammonium ion and/or decreased oxidation of nitrite. The composition may include a combination of naturally occurring nitrification inhibitors, such as a combination of a hydrophobic and hydrophilic naturally occurring nitrification inhibitor. In some instances, the combination of hydrophilic and hydrophobic naturally occurring nitrification inhibitors may include methyl 3-(4-hydroxyphenyl) propionate and 1,9-decanediol, respectively. In some instances, the combination of hydrophobic and hydrophilic naturally occurring nitrification inhibitors may also include one or more urease inhibitors. In some instances, the urease inhibitor may include N-(n-butyl) thiophosphoric triamide (NBPT).

Some aspects of the disclosure are directed to a method for inhibiting the biological oxidation of ammonium and/or ammonia nitrogen (e.g., $NH_4$-N) to nitrite and/or nitrate nitrogen (e.g., $NO_3$-N) activity in soil comprising applying to the soil a composition comprising the combination of naturally occurring nitrification inhibitors. The combination of naturally occurring nitrification inhibitors may be applied to the soil by application directly to the soil, by tilling into a soil, by application to water that contacts the soil, etc. In some instances, the naturally occurring nitrification inhibitors are applied to the soil at the same time as, or at a different time than, a fertilizer, water, additional soil, a soil supplement, a seed, a plant, etc.

Some aspects of the disclosure are directed to a composition containing the combination of a hydrophobic naturally occurring nitrification inhibitor; a hydrophilic naturally occurring nitrification inhibitor; and one or more of a biochar and/or a urease inhibitor. In some aspects, the hydrophilic naturally occurring nitrification inhibitor includes methyl 3-(4-hydroxyphenyl) propionate. In some aspects, the hydrophobic naturally occurring nitrification inhibitor includes 1,9-decanediol. In some aspects, the composition may include both a biochar and a urease inhibitor. The composition, in some instances, can consist or consist essentially of the naturally occurring nitrification inhibitors. In some aspects, the composition further comprises at least one nitrogenous fertilizer component. The at least one nitrogenous fertilizer component can be selected from the group consisting of urea, an ammonium salt, anhydrous ammonia, and combinations thereof. In specific aspects, the at least one nitrogenous fertilizer components is urea. In some embodiments, the urea is a solidified urea melt. In some aspects, the hydrophobic naturally occurring nitrification inhibitor and/or the hydrophilic naturally occurring nitrification inhibitor may be distributed throughout the composition. In some aspects, the hydrophobic naturally occurring nitrification inhibitor and/or the hydrophilic naturally occurring nitrification inhibitor may be comprised in a coating of the composition. In some aspects, the naturally occurring nitrification inhibitors are comprised within the solidified urea melt. In some instances, the biochar and/or a urease inhibitor may be distributed throughout the composition. In some instances, biochar and/or a urease inhibitor are comprised in a coating of the composition.

In some aspects, the composition further comprises at least one additional nitrification inhibitor. The at least one additional nitrification inhibitor can be nitrapyrin, dicyandiamide, ammonium thiosulfate, methyl-3-(4-hydroxyphenyl) propionate, 1,9-decanediol, potassium azide, 2-amino-4-chloro-6-methylpyrimidine, sulfathiazole, 4-amino-1,2,4-triazole, 2,4-diamino-6-trichloromethyl-s-triazine, potassium ethylxanthate, guanylthiourea, 4-nitrobenzotrichloride, 4-mesylbenzotrichloride, sodium thiocarbonate, phenylmercuric acetate, 3, 4-dimethylpyrazole phosphate, or sorgoleone, or combinations thereof. In some aspects, the composition further comprises at least one urease inhibitor. The at least one urease inhibitor may be at least one triamide, such as N-(n-butyl) thiophosphoric triamide (NBPT) and N-(n-propyl) thiophosphoric triamide. In some instances, the composition does not comprise NBPT.

In some aspects, the nitrification inhibitors are comprised within a carrier. In some aspects, the carrier may include biochar. In some aspects, the carrier may comprises an organic solvent, plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly- galactomannan, dextran, xanthan, keratan sulphate, MgO, CaO, bone mill powder, rice husk, $CaCO_3$, $Na_2CO_3$, $K_2CO_3$, $KH_2PO_4$, $NaHCO_3$, and/or $MgCO_3$. In some embodiments, the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, polyethylene glycol, cyclodextrin, or a combination thereof. In some aspects, the organic solvent comprises one or more of an alcohol, an alkane, an acid, a hydroxide, an oil, a polyol solvent, a polyamine solvent, a primary amine solvent, a secondary amine solvent, an alkanol solvent, a protic solvent, etc.

Certain aspects of the disclosure are directed to a method for inhibiting nitrification activity in soil or a crop comprising applying to the soil or crop a composition comprising any of the compositions described herein. In some instances, the method includes combining the hydrophobic naturally occurring nitrification inhibitor, the hydrophilic naturally occurring nitrification inhibitor, and the one or more of a biochar and/or a urease inhibitor. In some instances, the combining includes combining the hydrophobic naturally occurring nitrification inhibitor and/or the hydrophilic naturally occurring nitrification inhibitor with a urea melt and allowing the urea melt to solidify to form the fertilizer composition. In some instances, the combining includes combining the hydrophobic naturally occurring nitrification inhibitor and/or the hydrophilic naturally occurring nitrification inhibitor with a solvent to form a naturally occurring nitrification inhibitor solution and contacting a fertilizer, a biochar, and/or a urease inhibitor with the nitrification inhibitor solution.

In some instances, the composition of these inhibitors may be a solid composition or a liquid formulation. In some instances, the composition may be injected into urea melt during a granulation process.

In some instances, the composition may include urease inhibitor such as N-(n-butyl) thiophosphoric triamide (NBPT). In some instances, the composition may not include N-(n-butyl) thiophosphoric triamide (NBPT). In some aspects, the method comprises contacting the composition with water before applying to the soil and/or crop. In some aspects, the combination of nitrification inhibitors may be applied to the soil by application directly to the soil, by tilling into a soil, by application to water that contacts the soil, etc. In some instances, the combination of nitrification inhibitors are applied to the soil at the same time as, or at a different time than, a fertilizer, water, additional soil, a soil supplement, a seed, a plant, etc.

In some aspects, the composition and/or method increases nitrogen use efficiency (NUE) of a crop or a fertilizer. In some aspects, the method further comprises applying a nitrogenous fertilizer component to the soil, wherein the nitrogenous fertilizer component and the composition are comprised in two separate compositions. In certain aspects, the two separate compositions are applied to the soil within one hour of each other. In other aspects, the two separate compositions are applied to the soil separately and not within one hour of each other. In other aspects, the nitrogenous fertilizer component and the combination of nitrification inhibitors are comprised in a single composition.

Also disclosed are the following aspects 1 to 15 of the present invention.

Aspect 1 concerns a composition comprising:

a hydrophobic naturally occurring nitrification inhibitor;
a hydrophilic naturally occurring nitrification inhibitor; and
one or more of a biochar and/or a urease inhibitor.

Aspect 2 concerns the composition of aspect 1, wherein the hydrophilic naturally occurring nitrification inhibitor comprises methyl 3-(4-hydroxyphenyl) propionate.

Aspect 3 concerns the composition of any one of aspects 1 to 2, wherein the hydrophobic naturally occurring nitrification inhibitor comprises 1,9-decanediol.

Aspect 4 concerns the composition of any one of aspects 1 to 3, comprising both a biochar and a urease inhibitor.

Aspect 5 concerns the composition of any one of aspects 1 to 4, further comprising a nitrogen fertilizer.

Aspect 6 concerns the composition of aspect 5, wherein the nitrogen fertilizer comprises urea.

Aspect 7 concerns the composition of any one of aspects 1 to 6, wherein the hydrophobic naturally occurring nitrification inhibitor and/or the hydrophilic naturally occurring nitrification inhibitor is distributed throughout the fertilizer composition.

Aspect 8 concerns the composition of any one of aspects 1 to 6, wherein the hydrophobic naturally occurring nitrification inhibitor and/or the hydrophilic naturally occurring nitrification inhibitor is comprised in a coating of the fertilizer composition.

Aspect 9 concerns the composition of any one of aspects 1 to 8, wherein the biochar and/or a urease inhibitor are distributed throughout the fertilizer composition.

Aspect 10 concerns the composition of any one of aspects 1 to 8, wherein the biochar and/or a urease inhibitor are comprised in a coating of the fertilizer composition.

Aspect 11 concerns a method for inhibiting nitrification activity in a soil or a crop, the method comprising applying to the soil and/or crop, the composition of any one of aspects 1 to 10.

Aspect 12 concerns the method of aspect 11, wherein the method comprises contacting the composition with water before applying to the soil and/or crop.

Aspect 13 concerns a method of making the fertilizer composition of any one of aspects 1 to 10, the method comprising combining the hydrophobic naturally occurring nitrification inhibitor, the hydrophilic naturally occurring nitrification inhibitor, and the one or more of a biochar and/or a urease inhibitor.

Aspect 14 concerns the method of aspect 13, wherein the combining comprises combining the hydrophobic naturally occurring nitrification inhibitor and/or the hydrophilic naturally occurring nitrification inhibitor with a urea melt and allowing the urea melt to solidify to form the fertilizer composition.

Aspect 15 concerns the method of aspect 13, wherein the combining comprises combining the hydrophobic naturally occurring nitrification inhibitor and/or the hydrophilic naturally occurring nitrification inhibitor with a solvent to form a naturally occurring nitrification inhibitor solution and contacting a fertilizer, biochar, and/or a urease inhibitor with the nitrification inhibitor solution.

A variety of combinations of urease inhibitors are contemplated that include a combination of competitive and non-competitive inhibitors. Competitive urease inhibitors include, but are not limited to, triamides, 2-nitrophenyl phosphoric triamide (2-NPT), N-(n-butyl) thiophosphoric triamide (NBPT), hydroxyurea (HU), thiourea, acetohydroxamic acid (AHA), phosporamidates, quinones, and Au(III) compounds. Non-competitive urease inhibitors include, but are not limited to, pyroglutamic acid. A variety of combinations of urease inhibitors are contemplated that include a combination of competitive and uncompetitive urease inhibitors. A variety of combinations of urease inhibitors are contemplated that include a combination of competitive and mixed competition urease inhibitors. Mixed competition urease inhibitors include, but are not limited to phenylphosphorodiamidate (PPD) and benzoylthioureas (BTUs). A variety of combinations of urease inhibitors are contemplated that include a combination of urease inhibitors that cooperatively inhibit urease. A variety of combinations of urease inhibitors are contemplated that include a combination of pyroglutamic acid and urease inhibitors with a melting point at or above 54 °C. Urease inhibitors that have melting points at or above 54 °C or above the melting point of NBPT, may be found in J. Agric. Food Chem. 2008, 56, 3721-3731, incorporated herein by reference. In some instances, the combination of urease inhibitors may include (2-nitrophenyl) phosphoric triamide (2-NPT) and pyroglutamic acid. Both inhibitors are more thermally stable than NBPT.

The term "nitrification inhibitor" is a compound that inhibits bacteria in soil from converting nitrogen, such as the nitrogen content provided in a fertilizer compound, into nitrate.

The term "naturally occurring nitrification inhibitors" includes biological nitrification inhibitors (BNIs).

The term "urease inhibitor" is a compound that inhibits activity of the enzyme urease, an enzyme which converts urea into ammonia.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination ofB and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. Compositions and methods "consisting essentially of" any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

## DETAILED DESCRIPTION OF THE INVENTION

Human activity has had the single largest influence on the global nitrogen cycle by introducing unprecedented amounts of reactive nitrogen into ecosystems. The agricultural industry, in particular, is the single largest human activity that affects the global nitrogen-cycle. In agricultural systems, rapid and unchecked loss of nitrogen by nitrification results in inefficient nitrogen-use by crops, over use of nitrogen fertilizers and leads to nitrogen-leakage and environmental pollution.

Certain aspects of the present disclosure are directed to compositions that inhibit nitrification, thereby increasing nitrogen longevity in soil. This is accomplished by applying one or more of the nitrification inhibitor compounds disclosed herein to a plant, soil, or crop. The nitrification inhibitors disclosed herein may be combined with additional nitrification inhibitors and/or urease inhibitors. Co-presence of biochemically distinct naturally occurring nitrification (hydrophobic and hydrophilic) in the soil could exert an additive or synergistic effect.

## I. Nitrification Inhibitors

Certain embodiments herein concern a composition comprising a combination of a hydrophobic naturally occurring nitrification inhibitor and a hydrophilic naturally occurring nitrification inhibitor. In some instances, the hydrophilic naturally occurring nitrification inhibitor may include methyl 3-(4-hydroxyphenyl) propionate (MHPP) and the hydrophobic naturally occurring nitrification inhibitor may include 1,9-decanediol. A variety of combinations of naturally occurring nitrification inhibitors are contemplated that include a combination of hydrophilic and hydrophobic inhibitors. The naturally occurring nitrification inhibitors include but are not limited to, MHPP and 1,9-decanediol, sorgoleone, sakuranatin, and brachialactone. In some instances, the composition comprises urease inhibitors. In some instances, the urease inhibitor includes N-(n-butyl) thiophosphoric triamide (NBPT). A variety of combinations of the hydrophobic naturally occurring nitrification inhibitors and the hydrophilic naturally occurring nitrification inhibitors are contemplated. A variety of combinations of naturally occurring nitrification inhibitors are contemplated that cooperatively inhibit nitrification. A variety of combinations of nitrification inhibitors are contemplated that include a combination of naturally occurring nitrification inhibitors and urease inhibitors with a melting point at or above 54 °C. Urease inhibitors that have melting points at or above 54 °C, or above the melting point of NBPT, may be found in J. Agric. Food Chem. 2008, 56, 3721-3731, incorporated herein by reference. In some instances, the naturally occurring nitrification inhibitors may further include a combination of urease inhibitors. In some instances, the combination does not include N-(n-butyl) thiophosphoric triamide (NBPT). In some instances, the combination includes a biochar. Biochar can be a highly aromatic carbon sequestration material produced by pyrolytic carbonization of biomass under anoxic or oxygen-limited conditions. Biochar can be rich in N, P, and K, and have high pH, high porosity, large specific surface area, high carbon content, high cation exchange capacity, and high thermal stability. In some instances, the biochar and/or a urease inhibitor are distributed throughout the fertilizer composition

In some instances, the composition of these inhibitors may be a solid composition or a liquid formulation. In some instances, the hydrophobic naturally occurring nitrification inhibitor and/or the hydrophilic naturally occurring nitrification inhibitor are distributed throughout the fertilizer composition. In some instances, the hydrophobic naturally occurring nitrification inhibitor and/or the hydrophilic naturally occurring nitrification inhibitor is comprised in a coating of the fertilizer composition. In some instances, the composition will be dissolved in a suitable solvent and sprayed over urea granules. In some embodiments of the invention, MHPP will be dissolved in a suitable solvent to form the coating formulation and sprayed over urea granules (such as in a coating machine) to obtain the uniform coating of MHPP over urea. In another embodiment of the composition includes MHPP and NBPT. In another embodiment of the composition includes MHPP and biochar. In another embodiment of the composition includes MHPP, NBPT, and biochar. In another embodiment of the composition includes MHPP (hydrophilic naturally occurring nitrification inhibitor), 1,9-decanediol (hydrophobic naturally occurring nitrification inhibitor), NBPT (urease inhibitor), and biochar.

In some instances, the composition may be injected into urea melt during a granulation process. In some instances, the MHPP may be mixed with urea melt. In some instances, any ingredient and/or composition described herein may be mixed with urea melt. In some instances, the urea melt can be mixed with any ingredient and/or composition described herein.

In some aspects, the combination of nitrification inhibitors are combined at a molar ratio of 100:1 to 1:100, such as at, greater than, less than, or between 10:9, 10:8, 10:7, 10:6, 10:5, 10:4, 10:3, 10:2, 10:1, 100:9, 100:8, 100:7, 100:6, 100:5, 100:4, 100:3, 100:2, 100:1, 1:1, 1:2, 1:3, 1:4, 1:5, 1:6, 1:7, 1:8, 1:9, 2:1, 3:1, 4:1, 5:1, 6:1, 7:1, 8:1, 9:1, 1:10, 2:10, 3:10, 4:10, 5:10, 6:10, 7:10, 8:10, 9:10, 1:100, 2:100, 3:100, 4:100, 5:100, 6:100, 7:100, 8:100, or 9:100. In some aspects, the combination of naturally occurring nitrification inhibitors to biochar by weight are combined at a ratio of 100:1 to 1:100, such as at, greater than, less than, or between 10:9, 10:8, 10:7, 10:6, 10:5, 10:4, 10:3, 10:2, 10:1, 100:9, 100:8, 100:7, 100:6, 100:5, 100:4, 100:3, 100:2, 100:1, 1:1, 1:2, 1:3, 1:4, 1:5, 1:6, 1:7, 1:8, 1:9, 2:1, 3:1, 4:1, 5:1, 6:1, 7:1, 8:1, 9:1, 1:10, 2:10, 3:10, 4:10, 5:10, 6:10, 7:10, 8:10, 9:10, 1:100, 2:100, 3:100, 4:100, 5:100, 6:100, 7:100, 8:100, or 9:100. In some instances, the combination of naturally occurring nitrification inhibitors to biochar by weight are combined at a ratio of 5:100, 6:100, 7:100, 8:100, 9:100, 1:10, 11:100, 12:100, 13:100, 14:100, 15:100, 16:100, 17:100, 18:100, 19:100, or 2:10.

In some aspects, the combination of nitrification inhibitors are combined in a composition at a concentration, for each nitrification inhibitor or for the combination of inhibitors, of at, greater than, less than, or between 0.0001, 0.0002, 0.0003, 0.0004, 0.0005, 0.0006, 0.0007, 0.0008, 0.0009, 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 g/100 g of the composition.

## II. Additional Components

The composition may further include any of the other components disclosed herein. In some instances, the composition includes at least one biochar, at least one nitrogenous fertilizer component, at least one naturally occurring nitrification inhibitor, and/or at least one urease inhibitor. In some instances, the combination of naturally occurring nitrification inhibitors is homogeneously distributed within, is coated on, is layered between, is encapsulated by, encapsulates, is suspended in, or is in a separate particle from any of the other components disclosed herein.

In some aspects, a fertilizer nutrient can be included or excluded in the naturally occurring nitrification inhibitor composition. If included, fertilizer nutrients can be chosen based on the particular needs of certain types of soil, climate, or other growing conditions to maximize the efficacy of the fertilizer in enhancing plant growth and crop yield.

Additional additives may also be included or excluded in the naturally occurring nitrification inhibitor composition. Non-limiting examples of additives that can be included or excluded from the naturally occurring nitrification inhibitor composition of the present invention may include nitrogen nutrients, phosphorus nutrients, potassium nutrients, micronutrients, and/or secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and/or potassium nitrate. In some aspects, the secondary nutrients may include calcium, magnesium, and/or sulfur, such as lime and/or superphosphate.

In some instances, the nitrification inhibitor composition may include or exclude at least one additional nitrification inhibitor and/or at least one urease inhibitor. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In some embodiments, the ureases inhibitor composition can comprise NBPT, DMPP, TU, DCD, PPDA, nitrapyrin, 5-ethoxy-3-trichloromethyl-1,2,4-thiadiazol, AM, MBT, ST, or a combination thereof. In some instances, the composition excludes NBPT and/or a nitrification inhibitor.

In some aspects, the nitrification inhibitors are comprised within a carrier. In some aspects, the carrier comprises one or more of biochar, an organic solvent, plaster of paris, flour, chalk powder, starch, gluten, kaolin, bentonite, colloidal silica, silica, dried distillers grains with solubles, lignin, a synthetic polymer, a wax, chitin, glycoaminoglycans, pectins, hyaluronic acid, chondroitin sulphate, dermatan sulphate, alginic acid, polymannuronic acid, polyguluronic acid, polyglucuronic acid, amylose, amylopectin, callose, chitosan, poly-galactomannan, dextran, xanthan, keratan sulphate, MgO, CaO, bone mill powder, rice husk, $CaCO_3$, $Na_2CO_3$, $K_2CO_3$, $KH_2PO_4$, $NaHCO_3$, and/or $MgCO_3$. In some embodiments, the synthetic polymer comprises poly butylene succinate adipate, poly lactic acid, poly butylene succinate, cellulose triacetate, cellulose diacetate, cellulose acetate, a starch acetate, poly(caprolactone), a poly(butylene terephthalate adipate), hydroxypropyl methylcellulose, hydroxyethyl methylcellulose, methylcellulose, ethylcellulose, ethyl methyl cellulose, hydroxy ethyl cellulose, hydroxypropyl cellulose, ethyl hydroxyethyl cellulose, carboxymethyl cellulose, polyethylene glycol, cyclodextrin, or a combination thereof. In some aspects, the organic solvent comprises one or more of an alcohol, an alkane, an acid, a hydroxide, an oil, a polyol solvent, a polyamine solvent, a primary amine solvent, a secondary amine solvent, an alkanol solvent, a protic solvent etc.

In some instances, a binder may be included in the nitrification inhibitor composition. Exemplary binders include a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, polyethylene glycol, poly e-caprolactone, poly L-lactide, poly butylene succinate, and biodegradable starch based polymers. The binder can include plaster of Paris, flour, starch, gluten, kaolin, bentonite, colloidal silica, a cyclodextrin, or combinations thereof. Suitable flours include, but are not limited to, rice flour, wheat flour, and bleached wheat flour. Suitable starches include, but are not limited to, dextrin modified starches.

In some instances, the nitrification inhibitor composition can include a pH buffer. Exemplary pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The nitrification inhibitor composition described herein can be comprised in a composition useful for application to soil and/or a fertilizer. In some aspects, the composition is comprised in a liquid or a solid. In some aspects, in addition to the nitrification inhibitor composition described herein, the composition may include fertilizer compounds, micronutrients, primary nutrients, urea, nitrogen nutrients, insecticides, herbicides, or fungicides, or combinations thereof. The nitrification inhibitor composition described herein can also be included in a blended composition comprising fertilizers. The fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A nitrification inhibitor composition formed into a granule can have desirable physical properties such as desired levels of abrasion resistance, granule strength, pelletizability, hygroscopicity, granule shape, and size distribution. In some aspects, the nitrification inhibitor composition granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the granule can dissolve in 1 ml of water at a pH 7, under stirring at a rate 90 to 110 rpm, and at an ambient temperature, within 5 minutes of adding 100 mg of the granules to the water. In some aspects, the granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved nitrification inhibitor granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of% weight loss using the formula:

$$\text{Weight loss due to attrition (wt. \%)} = \frac{weight\ of\ sample\ remained\ on\ 2\ mm\ sieve\ ((W2))}{intial\ weight\ of\ the\ sample\ (W1)} \times 100$$

In some instances, the nitrification inhibitor composition can be extruded before drying. The extruder can extrude the nitrification inhibitor composition at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the nitrification inhibitor composition at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final solid nitrification inhibitor product, such as a granule, can be 0.5 to 5 mm, or 1 to 4 mm, and having a size lower than 0.5 mm or 1 mm, and/or having a size bigger than 4 mm or 5 mm can be obtained using one or more size screens. In certain aspects, the nitrification inhibitor composition can be rounded and/or spheronized in a spheronizer. In some instances, the nitrification inhibitor composition is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the nitrification inhibitor composition can be dried in a dryer at a temperature 40 °C to 85 °C, or at least any one of, at most any one of, equal to any one of, or between any two of 40, 45, 50, 55, 60, 65, 70, 75, 80 and 85 °C. In some aspects, the dryer can be a fluid bed dryer, drum dryer, or flash dryer. In some aspects, the nitrification inhibitor composition can be dried in the dryer with an hot air flow having a flow rate of at least any one of, at most any one of, equal to any one of, or between any two of 100, 150, 200, 250, 300, 350, 400, 450, and 500 m$^3$/hr and/or a rotation of at least any one of, at most any one of, equal to any one of, or between any two of 5, 10, 15, 20, 25, 30, 35, 40, 45, and 50 rpm.

### III. Methods of Using the Nitrification Inhibitors

The nitrification inhibitor composition, including compositions containing the naturally occurring nitrification inhibitor, can be used in methods of inhibiting the nitrification activity in soil. Such methods can include applying to the soil, a liquid carrier, a fertilizer, or a crop an effective amount of a composition and/or blend containing the nitrification inhibitors of the present invention. The method may include increasing the growth and yield of crops, trees, ornamentals, etc., such as, for example, palm, coconut, rice, wheat, corn, barley, oats, and/or soybeans. The method can include applying the nitrification inhibitor composition of the present invention to at least one of a soil, an organism, a liquid carrier, a liquid solvent, etc. The composition(s) containing the nitrification inhibitor can be applied to plants, water, and/or soil through any suitable method of application.

Non-limiting examples of plants that can benefit from the nitrification inhibitor of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the nitrification inhibitors of the present invention can be ascertained by analyzing inhibiting nitrification activity in the presence of the nitrification combination composition as compared to the absence of the naturally occurring nitrification inhibitor composition. It is understood that different soils have different characteristics, which can affect the effectiveness of the nitrification inhibitor compositions. The effectiveness of a nitrification inhibitor composition can also be directly compared to other nitrification inhibitor compositions by doing a side-by-side comparison in the same soil under the same conditions.

## EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

Coating of Biological Nitrification Inhibitors (BNI) on Urea

Para hydroxybenzene methyl propionate (MHPP) - a hydrophilic BNI - can be easily dissolved in organic solvents like alcohol, ether, acetone etc. Around 1% to 5% MHPP can be dissolved in a solvent. Another BNI that is hydrophobic in nature, like 1,9-decanediol, can be added and spray coated on urea granules until a homogeneous coating layer is formed on urea granules. The granules can be allowed to dry before further characterization. Additionally, this coating can be integrated with an additional layer of a urease inhibitor coating that is sprayed after dissolving 0.1% NBPT in solution. Finally, a layer of biochar can be coated as a carrier and for protection.

### Example 2

Melt-mixing of Biological Nitrification Inhibitors (BNI) with Urea

Solid form of MHPP (hydrophilic BNI - 1 to 5%) and 1,9-decanediol (hydrophobic BNI- 1 to 5%) can be added to molten urea and crystallized into granules.

### Example 3

Nitrification Inhibition Activity

A nitrification test can be performed under nitrification active conditions. The activity of a naturally occurring nitrification inhibitor or combinations of naturally occurring nitrification inhibitors can be compared to that of the synthetic nitrification inhibitor alone, other combinations of synthetic nitrification inhibitors, or other nitrification inhibitors. Urea can be added to a sludge of crop soil and water with or without a combination of naturally occurring nitrification inhibitors, or comparison inhibitors, combinations of inhibitors, or no inhibitors. Carbon dioxide and ammonia concentrations can be monitored over time (e.g., t = 0, 2, 4, 6, 8, 24, and 29 hours). ammonium oxidation can be calculated from the analysis results.

The pH and oxygen content can also be monitored during the tests. The pH level can be kept between 7 and 8 at the beginning of the tests by adding 1N HCl or 1N NaOH. Oxygen can be constantly purged into the sludge solutions throughout the test to get maximum aeration.

**[0075]** * * *

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1. A composition comprising:

    a hydrophobic naturally occurring nitrification inhibitor;
    a hydrophilic naturally occurring nitrification inhibitor; and
    one or more of a biochar and/or a urease inhibitor.

2. The composition of claim 1, wherein the hydrophilic naturally occurring nitrification inhibitor comprises methyl 3-(4-hydroxyphenyl) propionate.

3. The composition of any one of claims 1 to 2, wherein the hydrophobic naturally occurring nitrification inhibitor comprises 1,9-decanediol.

4. The composition of any one of claims 1 to 3, comprising both a biochar and a urease inhibitor.

5. The composition of any one of claims 1 to 4, further comprising a nitrogen fertilizer.

6. The fertilizer composition of claim 5, wherein the nitrogen fertilizer comprises urea.

7. The composition of any one of claims 1 to 6, wherein the hydrophobic naturally occurring nitrification inhibitor and/or the hydrophilic naturally occurring nitrification inhibitor is distributed throughout the fertilizer composition.

8. The composition of any one of claims 1 to 6, wherein the hydrophobic naturally occurring nitrification inhibitor and/or the hydrophilic naturally occurring nitrification inhibitor is comprised in a coating of the fertilizer composition.

9. The composition of any one of claims 1 to 8, wherein the biochar and/or a urease inhibitor are distributed throughout the fertilizer composition.

10. The composition of any one of claims 1 to 8, wherein the biochar and/or a urease inhibitor are comprised in a coating of the fertilizer composition.

11. A method for inhibiting nitrification activity in a soil or a crop, the method comprising applying to the soil and/or crop, the composition of any one of claims 1 to 10.

12. The method of claim 11, wherein the method comprises contacting the composition with water before applying to the soil and/or crop.

13. A method of making the fertilizer composition of any one of claims 1 to 10, the method comprising combining the hydrophobic naturally occurring nitrification inhibitor, the hydrophilic naturally occurring nitrification inhibitor, and the one or more of a biochar and/or a urease inhibitor.

14. The method of claim 13, wherein the combining comprises combining the hydrophobic naturally occurring nitrification inhibitor and/or the hydrophilic naturally occurring nitrification inhibitor with a urea melt and allowing the urea melt to solidify to form the fertilizer composition.

15. The method of claim 13, wherein the combining comprises combining the hydrophobic naturally occurring nitrification inhibitor and/or the hydrophilic naturally occurring nitrification inhibitor with a solvent to form a naturally occurring nitrification inhibitor solution and contacting a fertilizer, a urease inhibitor, and/or a biochar with the nitrification inhibitor solution.

# EUROPEAN SEARCH REPORT

**Application Number**

EP 24 17 9616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 321 498 A1 (SABIC GLOBAL TECHNOLOGIES BV [NL]) 14 February 2024 (2024-02-14) * paragraphs [0008], [0009]; claims 12, 13 * | 1-15 | INV. C05G3/90 |
| A | LAN TING ET AL: "Synergistic effects of biological nitrification inhibitor, urease inhibitor, and biochar on NH3 volatilization, N leaching, and nitrogen use efficiency in a calcareous soil-wheat system", APPLIED SOIL ECOLOGY, ELSEVIER, AMSTERDAM, NL, vol. 174, 7 February 2022 (2022-02-07), XP087000544, ISSN: 0929-1393, DOI: 10.1016/J.APSOIL.2022.104412 [retrieved on 2022-02-07] * abstract; page 2, left column, lines 4-8 * | 1-15 | |
| A | US 2023/147588 A1 (SHI WEIMING [CN] ET AL) 11 May 2023 (2023-05-11) * paragraph [0027]; example 2 * | 1-15 | **TECHNICAL FIELDS SEARCHED (IPC)** <br><br> C05G |

The present search report has been drawn up for all claims

| Place of search | Date of completion of the search | Examiner |
|---|---|---|
| The Hague | 5 November 2024 | Kappen, Sascha |

## ANNEX TO THE EUROPEAN SEARCH REPORT
## ON EUROPEAN PATENT APPLICATION NO.

EP 24 17 9616

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | | Publication date | Patent family member(s) | | Publication date |
|---|---|---|---|---|---|
| EP 4321498 | A1 | 14-02-2024 | EP | 4321498 A1 | 14-02-2024 |
| | | | WO | 2024033872 A1 | 15-02-2024 |
| US 2023147588 | A1 | 11-05-2023 | CN | 114230416 A | 25-03-2022 |
| | | | US | 2023147588 A1 | 11-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *J. Agric. Food Chem.*, 2008, vol. 56, 3721-3731